(19) Europäisches Patentamt
European Patent Office
Office européen des brevets

(11) **EP 3 600 984 B1**

(12) **EUROPÄISCHE PATENTSCHRIFT**

(45) Veröffentlichungstag und Bekanntmachung des Hinweises auf die Patenterteilung:
**01.03.2023   Patentblatt 2023/09**

(21) Anmeldenummer: **18714465.4**

(22) Anmeldetag: **19.03.2018**

(51) Internationale Patentklassifikation (IPC):
**B60T 8/00** (2006.01)       **B60T 13/58** (2006.01)

(52) Gemeinsame Patentklassifikation (CPC):
**B60T 8/00; B60T 13/585;** B60T 2270/604

(86) Internationale Anmeldenummer:
**PCT/EP2018/056835**

(87) Internationale Veröffentlichungsnummer:
**WO 2018/177785 (04.10.2018 Gazette 2018/40)**

(54) **VERFAHREN ZUM KOMPENSIEREN EINER GERINGEN AKTUATORDYNAMIK EINER MECHANISCHEN BREMSE EINES KRAFTFAHRZEUGS SOWIE STEUERVORRICHTUNG**

METHOD FOR COMPENSATING FOR LOW ACTUATING DYNAMICS OF A MECHANICAL BRAKE OF A MOTOR VEHICLE, AND CONTROL DEVICE

PROCÉDÉ DE COMPENSATION D'UNE FAIBLE DYNAMIQUE D'ACTIONNEUR D'UN FREIN MÉCANIQUE D'UN VÉHICULE AUTOMOBILE ET DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2017   DE 102017205209**

(43) Veröffentlichungstag der Anmeldung:
**05.02.2020   Patentblatt 2020/06**

(73) Patentinhaber: **Volkswagen Aktiengesellschaft 38440 Wolfsburg (DE)**

(72) Erfinder:
• **BUSSE, Oliver**
  **38442 Wolfsburg (DE)**
• **HAUSDÖRFER, Frank**
  **38530 Didderse (DE)**

(56) Entgegenhaltungen:
EP-A1- 2 743 151       WO-A1-2006/076999
DE-A1- 4 235 502       DE-A1-102015 215 532
US-A1- 2014 324 316    US-A1- 2016 236 672

EP 3 600 984 B1

**Beschreibung**

Die Erfindung betrifft ein Verfahren zum Kompensieren einer geringen Aktuatordynamik einer mechanischen Bremse eines Kraftfahrzeugs. Die Kompensation findet statt, während eine angeforderte Gesamtverzögerung zwischen der mechanischen Bremse einerseits und einer zweiten Fahrzeugkomponente andererseits aufgeteilt wird. Zu der Erfindung gehört auch eine Steuervorrichtung zum Durchführen des Verfahrens.

Eine mechanische Bremse kann ein mechanisches Bremsmoment (im Folgenden als mechanisches Ist-Bremsmoment bezeichnet) auch bei unbetätigtem Bremspedal in Abhängigkeit von einem elektrischen oder digitalen Anforderungssignal auf ein mechanisches Soll-Bremsmoment einregeln. Das Soll-Bremsmoment kann z.B. von einem Abstandsregelautomaten angefordert werden. Zum Einregeln des Ist-Bremsmoments auf das Soll-Bremsmoment wird durch einen Regler der mechanischen Bremse mittels einer Pumpe Bremsflüssigkeit in einen Bremszylinder gepumpt, damit ein Bremsdruck in dem Bremssystem der mechanischen Bremse vergrößert und hierdurch Bremsbeläge gegen Bremsscheiben gedrückt werden. Eine solche Pumpe einer mechanischen Bremse ist aber kein Drucksteller für den Bremsdruck, sondern ein Volumenstromsteller, da der Bremsdruck indirekt durch Fördern des Volumens an Bremsflüssigkeit eingestellt wird. Die Wirkgröße ist also das von der Pumpe in den Bremszylinder geförderte Bremsfluid, welches dann den Bremsdruck verursacht, der letztendlich die Fläche der Bremsbeläge auf die Bremsscheibe presst und damit durch Reibung bremst.

Jede mechanische Bremse hat dabei eine Kennlinie, welche Bremsdruck und gefördertes Volumen im Bremssystem miteinander in Beziehung setzt. Diese Kennlinie hat in erster Näherung einen parabelförmigen Verlauf, d.h. ausgehend von einem druckfreien Zustand bewirkt die Förderung der Bremsflüssigkeit durch die Pumpe zunächst kaum eine Veränderung des Bremsdruckes, und erst bei weiterer Förderung von Bremsflüssigkeit ergibt sich ein Anstieg des Bremsdruckes. Somit ist in der Anfangsphase des Momentenaufbaus die Aktuatordynamik sehr gering, da die Pumpe zunächst Bremsflüssigkeit fördert, ohne dass sich hierdurch eine nennenswerte Veränderung des Bremsdrucks ergibt. Eine Verbesserung der Aktuatordynamik ist prinzipiell durch die Erhöhung der Pumpendrehzahl erzielbar. Allerdings kann die Pumpe nicht mit beliebig hoher Pumpendrehzahl betrieben werden, da dies zu hörbaren Geräuschen führen würde. Mit anderen Worten ist die Dynamik des Bremsaktuators, d.h. in dem beschriebenen Fall die Pumpe mit dem daran angeschlossenen Bremszylinder, begrenzt. Wird ein mechanisches Soll-Bremsmoment mit einem zeitlichen Anstieg oder Gradienten vorgegeben, der größer als der zeitliche Gradient oder der zeitliche Anstieg gemäß der Aktuatordynamik des Bremsaktuators ist, so kann dem zeitlichen Verlauf des mechanischen Soll-Bremsmoments nicht unmittelbar gefolgt werden, sondern es ergibt sich in der Momentenaufbauphase beim Einregeln des mechanischen Ist-Bremsmoments auf das mechanische Soll-Bremsmoment eine Regelabweichung.

In elektrifizierten Kraftfahrzeugen gibt es zwei Möglichkeiten, einen Verzögerungswunsch einer Geschwindigkeitsregelung, also eine Soll-Gesamtverzögerung, umzusetzen. Mit Geschwindigkeitsregelung ist hierbei zum Beispiel ein Geschwindigkeitsregelautomat (ACC - Automatic Cruise Control) gemeint. Einerseits ist nach wie vor die mechanische Bremse verfügbar, die entweder durch eine Pumpe (zum Beispiel eine Pumpe des ESC; ESC - elektronische Stabilitätskontrolle) oder durch einen elektrischen Bremskraftverstärker (eBKV) den Bremsdruck und somit das mechanische Ist-Bremsmoment aufbauen kann. Andererseits bietet die Rekuperation mittels einer elektrischen Maschine im Fahrantrieb eine weitere, energetisch günstigere Verzögerungsmöglichkeit. Die Aufteilung der Bremskraft oder des Bremsmoments oder der Verzögerung (negative Beschleunigung) auf die verfügbaren Stellglieder (Rekuperation und mechanische Bremse) wird als Blending (Überblenden) oder Brake-Blending (Brake - Bremse) bezeichnet.

Die verfügbaren Verzögerungsmöglichkeiten (Rekuperation einerseits und mechanische Bremse andererseits) weisen deutlich unterschiedliche Aktuatordynamiken auf. Die Rekuperation ist in erster Linie durch Fahrverhaltensfilterung, Ruckeldämpfer zur Vermeidung von Triebstrangschwingungen und Batterieperformance beeinflusst, kann aber ansonsten mit höherer oder größerer Aktuatordynamik betrieben werden als eine mechanische Bremse in der besagten Momentenaufbauphase. Die mechanische Bremse mit der beschriebenen elektrischen Hydraulikpumpe muss aus der Nulllage heraus in der Momentenaufbauphase erst einmal ein vorbestimmtes Volumen an Bremsflüssigkeit verschieben oder fördern, bis sie mit einer ausreichenden Aktuatordynamik einem vorgegebenen Soll-Bremsmoment folgen kann. Außerdem ist der Druckaufbau und Abbau einer Stufigkeit unterworfen, die einerseits auf das Wirkprinzip der Pumpe zurückgehen kann (zum Beispiel Hubkolbenpumpe) und andererseits auf das Druckregelkonzept des Reglers der mechanischen Bremse zurückzuführen ist.

Dagegen funktioniert eine mechanische Bremse über den gesamten darstellbaren Verzögerungsbereich von Fahrerassistenzsystemen zuverlässig. Die Rekuperation muss zwar nicht abgebrochen werden, reicht jedoch aus Fahrdynamikgründen (nur die angetriebene Achse wird gebremst, da kein Antiblockiersystem mit Rekuperation möglich ist) sowie aufgrund des begrenzten Stellbereichs (Überlastung der E-Maschine und/oder der Batterie) nicht aus, um jede Verzögerung eines Assistenzsystems darzustellen.

Aus energetischer Sicht ist es sinnvoll, ausschließlich rekuperativ zu bremsen, bis die Stellbereichsbegrenzung des Aktuators (E-Maschine) erreicht ist. Dadurch ergibt sich aber das Problem, dass in der instationären Momentenaufbauphase, wenn also das mechanische Bremsmoment aufgebaut wird und dabei noch instationär das mechanische Soll-Bremsmoment ansteigt oder vergrößert wird, diese instationäre Momentenaufbauphase die beschriebene Regelabweichung aufgrund der begrenzten Aktuatordynamik der mechanischen Bremse aufweisen kann. Insbesondere bei einem Fahrdynamikeingriff oder einer Notbremsung ist dies unerwünscht. Wird nämlich für ein Kraftfahrzeug eine Soll-Gesamtverzögerung mit hoher Dynamik angefordert, so vergeht wertvolle Zeit, bis mittels der mechanischen Bremse dem gemäß der Soll-Gesamtverzögerung vorgegebenen Soll-Bremsmoment gefolgt wird.

Ein Kraftfahrzeug mit einer Aufteilung der angeforderten Soll-Gesamtverzögerung auf eine hydraulische Bremse und ein Rekuperationssystem ist z.B. aus der DE 10 2012 020 880 A1 bekannt.

Kriterien für das strategische Aufteilen der Soll-Gesamtverzögerung auf eine mechanische Bremse einerseits und ein Rekuperationssystem andererseits sind aus der DE 198 10 656 A1 bekannt.

Eine Kompensation von Toleranzen (z.B. Lüftspiele, Reibwertschwankungen, Temperatureffekte und/oder ein Verschleiß) eines rekuperativen Bremssystems beschreibt die EP 2 743 151 A1.

Aus der DE 10 2015 215 532 A1 ist bekannt, in Abhängigkeit von einer Bremspedalstellung eine Radbremseinrichtung (Reibbremsmoment) und/oder eine Elektromaschine (Rekuperationsbremsmoment) derart anzusteuern, sodass diese zusammen ein Soll-Bremsmoment erzeugen.

Der Erfindung liegt die Aufgabe zugrunde, bei einem Kraftfahrzeug die Aktuatordynamik einer mechanischen Bremse dahingehend zu kompensieren, dass sich in einer Momentenaufbauphase des mechanischen Ist-Bremsmoments die begrenzte Aktuatordynamik nicht auf die Bereitstellung einer angeforderten Soll-Gesamtverzögerung auswirkt.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren zum Kompensieren der Aktuatordynamik der mechanischen Bremse eines Kraftfahrzeugs bereitgestellt, falls diese es verhindert, einem Signal für ein vorgegebenes mechanisches Soll-Bremsmoment zu folgen. Das Verfahren geht davon aus, dass zusätzlich zu der mechanischen Bremse noch eine von der mechanischen Bremse verschiedene Fahrzeugkomponente zum Erzeugen eines Moments verfügbar ist. Dieses Moment wird im Folgenden als Kompensationsmoment bezeichnet. Die Fahrzeugkomponente kann beispielsweise ein Rekuperationssystem sein. Des Weiteren wird davon ausgegangen, dass eine Aufteileinrichtung vorgesehen ist, die eine Vorgabe für eine Soll-Gesamtverzögerung des Kraftfahrzeugs empfängt. In Abhängigkeit von der Soll-Gesamtverzögerung ermittelt die Aufteileinrichtung in der beschriebenen Weise ein mechanisches Soll-Bremsmoment und signalisiert dieses mechanische Soll-Bremsmoment an die mechanische Bremse, damit die mechanische Bremse durch Betreiben eines Bremsaktuators ein mechanisches Ist-Bremsmoment auf das mechanische Soll-Bremsmoment einregelt. Der Bremsaktuator kann z.B. eine elektrische Hydraulikpumpe mit einem von dieser mit Bremsflüssigkeit beaufschlagtem Bremssystem (z.B. eine Bremsleitung) umfassen. Beim Einregeln weist die Aktuatordynamik des Bremsaktuators in einer instationären Momentenaufbauphase des Ist-Bremsmoments einen begrenzten zeitlichen Gradienten kleiner als ein zeitlicher Gradient des signalisierten mechanischen Soll-Bremsmoments auf, so dass sich beim Einregeln eine Regelabweichung oder eine Regeldifferenz oder ein Regelfehler ergibt.

Mit anderen Worten ist die Aktuatordynamik des Bremsaktuators geringer als eine zeitliche Veränderung oder Dynamik des mechanischen Soll-Bremsmoments, das von der Aufteileinrichtung vorgegeben wird. Die Aufteileinrichtung prädiziert deshalb das mechanische Ist-Bremsmoment mittels eines Modells des Bremsaktuators in Abhängigkeit von einem aktuellen Betriebszustand des Bremsaktuators (z.B. aktueller Bremsdruck) und in Abhängigkeit von dem Gradienten des mechanischen Soll-Bremsmoments (d.h. der mathematischen zeitlichen Ableitung oder Steigung). Mit anderen Worten ist in der Aufteileinrichtung mittels des Modells bekannt, welches mechanische Ist-Bremsmoment durch den Bremsaktuator aktuell erzeugt werden kann. In Abhängigkeit von dem prädizierten mechanischen Ist-Bremsmoment erzeugt die Aufteileinrichtung dann durch Ansteuern der zumindest einen vorbestimmten, von der mechanischen Bremse verschiedenen Fahrzeugkomponente ein Kompensationsmoment, durch welches sich in dem Kraftfahrzeug insgesamt die Soll-Gesamtverzögerung ergibt. Trotz des begrenzten zeitlichen Gradienten des mechanischen Ist-Bremsmoments aufgrund der Aktuatordynamik des Bremsaktuators wird also die Soll-Gesamtverzögerung erreicht, indem durch die Aufteileinrichtung die zumindest eine Fahrzeugkomponente dahingehend zur Hilfe genommen oder eingesetzt wird, dass mittels eines damit erzeugten Kompensationsmoments der Einfluss der Aktuatordynamik des Bremsaktuators kompensiert wird. Die Ist-Gesamtverzögerung wird damit auf die Soll-Gesamtverzögerung eingestellt.

Durch die Erfindung ergibt sich der Vorteil, dass sich der begrenzte zeitliche Gradient des mechanischen Ist-Bremsmoments nicht auf die einzustellende oder vorgegebene Soll-Gesamtverzögerung auswirkt. Mittels des Modells wird der tatsächliche zeitliche Verlauf des mechanischen Ist-Bremsmoments prädiziert und daraufhin mittels der zumindest einen vorbestimmten Fahrzeugkomponente ein Kompensationsmoment erzeugt.

Das Aufteilen der zum Beispiel durch einen Abstandsregelautomaten angeforderten Soll-Gesamtverzögerung des Kraftfahrzeugs auf ein mechanisches Soll-Bremsmoment für die mechanische Bremse einerseits und ein weiteres Soll-Bremsmoment zum Beispiel für eine Rekuperation andererseits kann durch die Aufteileinrichtung gemäß an sich aus dem Stand der Technik bekannten Kriterien, wie beispielsweise Verschleißoptimierung und/oder Optimierung der Effizienz des Kraftfahrzeugs, erfolgen. Die Aufteileinrichtung kann hierzu mittels einer Prozessoreinrichtung realisiert sein, die zumindest einen Mikroprozessor und/oder zumindest einen Mikrocontroller aufweisen kann.

Das Verfahren wird für unterschiedliche Vorgaben der Soll-Gesamtverzögerung durchgeführt. Die Aufteileinrichtung empfängt hierzu die Vorgabe für die Soll-Gesamtverzögerung jeweils zumindest einmal aus einem Geschwindigkeitsregelautomaten und/oder einem Drive-by-Wire-System und/oder aus einer Schleppmoment-Simulation. Eine Schleppmoment-Simulation kann in einem Elektrofahrzeug das Schleppmoment eines Verbrennungsmotors nachbilden.

Zu der Erfindung gehören auch Weiterbildungen, durch deren Merkmale sich zusätzliche Vorteile ergeben.

Um das Kompensationsmoment zu erzeugen, wird in der beschriebenen Weise zumindest eine Fahrzeugkomponente angesteuert. Als Fahrzeugkomponente kann jeweils ein Rekuperationssystem des Kraftfahrzeugs und/oder ein Retarder angesteuert werden. Ein Rekuperationssystem kann eine elektrische Maschine als Generator und einen elektrischen Energiespeicher zum Speichern von durch den Generator erzeugter elektrischer Energie umfassen. Ein Retarder ist eine hydrodynamische oder elektrodynamische Dauerbremse. Das Kompensationsmoment wird in diesem Fall als Bremsmoment erzeugt und in der beschriebenen instationären Momentenaufbauphase (Gradient des mechanischen Ist-Bremsmoments kleiner als der Gradient des mechanischen Soll-Bremsmoments) auf den Wert der Regelabweichung eingestellt. Mit anderen Worten wird mittels des Rekuperationssystems und/oder des Retarders ein zusätzliches Bremsmoment als Kompensationsmoment erzeugt, damit sich aus der Summe des mechanischen Ist-Bremsmoments und des Kompensationsmoments insgesamt das für die mechanische Bremse vorgegebene mechanische Soll-Bremsmoment ergibt. Sobald in dem Bremsaktuator der Bremsdruck ausreichend groß ist (größer als ein Schwellenwert), kann das mechanische Soll-Bremsmoment ausschließlich mittels des Bremsaktuators selbst bereitgestellt werden, d.h. die Aktuatordynamik ist dann zumindest so groß wie die zeitliche Dynamik oder der Gradient des mechanischen Soll-Bremsmoments. Das Ausgleichen der Regelabweichung, die sich aufgrund des instationären Momentenaufbaus ergibt, wird im Folgenden auch als Instationärausgleich bezeichnet. Die Momentenaufbauphase wird hier auch als "instationär" bezeichnet, da es hier um das Verändern des im Bremszylinder befindlichen Fluidvolumens geht, also um das Fördern von zusätzlichem Bremsfluid in den Bremszylinder, um dem ansteigenden mechanischen Soll-Bremsmoment zu folgen.

Eine solche instationäre Momentenaufbauphase kann sich beispielsweise ergeben, wenn die Soll-Gesamtverzögerung nicht mehr aus einer Mischung oder einem gleichzeitigen Betrieb von Rekuperationssystem/Retarder einerseits und mechanischer Bremse andererseits erfolgen soll, sondern zu einem fahrsituationsabhängigen, vorgegebenen Anteil mittels der mechanischen Bremse gebremst werden soll, wie dies bei einem Fahrdynamikeingriff durch ein Fahrerassistenzsystem in der einleitend beschriebenen Weise nötig sein kann (Notbremsung, Fahrdynamikstabilisierung) oder bei einer Bremsung durch einen Fahrer. Bei einer Betätigung des Bremspedals und/oder bei einem durch ein Fahrerassistenzsystem signalisierten Bremseingriff und/oder bei einem Rekuperationsabbruch wird dann ein durch die Aufteileinrichtung vorgegebenes Soll-Bremsmoment für das Rekuperationssystem und/oder den Retarder graduell reduziert und das mechanische Soll-Bremsmoment für die mechanische Bremse vergrößert, um auf die mechanische Bremse überzublenden. Es ergeben sich also Rampenfunktionen zum Ausblenden des Rekuperationssystems und/oder Retarders und zum Einblenden der mechanischen Bremse. Hierdurch wird dann die Bedienung des Bremspedals und/oder der Bremseingriff des Fahrerassistenzsystems ganz oder teilweise mittels der mechanischen Bremse umgesetzt. Durch das rampenförmige Überblenden kann hierbei die sich bei der mechanischen Bremse in der instationäre Momentenaufbauphase ergebende Regelabweichung weiterhin während des Ausblendens noch durch das Rekuperationssystem und/oder den Retarder mittels des beschriebenen Kompensationsmoments kompensiert werden, bis vollständig auf mechanische Bremse übergeblendet ist. Bei vollständig eingeblendeter mechanischer Bremse ergibt sich dann der eingangs beschriebenen Vorteil, dass die mechanische Bremse die Soll-Gesamtverzögerung mit einer Dynamik umsetzen kann, durch welche sich eine Regelabweichung ergibt, die kleiner als ein vorbestimmter oder vorgebbarer Grenzwert ist. Im Falle einer Bedienung des Bremspedals und/oder eines Eingriffs eines vorbestimmten Fahrerassistenzsystems erfolgt also zum Beispiel ein Ausblenden der Rekuperation bei gleichzeitigem Einblenden der mechanischen Bremse. Bis zum vollständigen Überblenden wird dabei weiterhin die instationäre Momentenaufbauphase kompensiert, findet also der Instationärausgleich statt.

Es muss also damit gerechnet werden, dass die Aufteilung auf ein mechanisches Soll-Bremsmoment und ein Rekuperationssystem unterbrochen wird, weil ein Fahrer ein Bremspedal betätigt und/oder weil ein vorbestimmtes Fahrerassistenzsystem einen Bremseingriff signalisiert und/oder das Rekuperationssystem keine Energie mehr aufnehmen kann. Damit in diesem Fall nicht die mechanische Bremse vom Leerlauf (Bremsdruck gleich 0) mittels des Bremsaktuators angefahren oder aktiviert werden muss, wird die mechanische Bremse bevorzugt vorbereitet oder vorgespannt (Bremsdruckaufbau). Hierzu wird selbst für den Fall, dass die mechanische Bremse nicht benötigt wird, sondern die vorgegebene Soll-Gesamtverzögerung vollständig mittels des Rekuperationssystems bewirkt werden könnte, also keine eine Anforderung des mechanischen Bremsmoments erfolgt, dennoch durch die Aufteileinrichtung nur ein Teil der angeforderten oder vorgegebenen Soll-Gesamtverzögerung mittels des Rekuperationssystems und/oder des Retarders bewirkt. Den verbleibenden Teil bewirkt die Aufteileinrichtung mittels der mechanischen Bremse. Mit anderen Worten wird die mechanische Bremse zumindest zum Bereitstellen des kleineren Teils der Soll-Gesamtverzögerung betrieben, sodass also der Bremsaktuator Bremsdruck aufbauen muss. Hierdurch muss die mechanische Bremse also auch ohne eine Betätigung eines Bremspedals und/oder einen Bremseingriff durch das vorbestimmte Fahrerassistenzsystem schon die instationäre Momentenaufbauphase zumindest teilweise durchlaufen, also das Bremssystem (z.B. die Bremsleitung) mittels der Pumpe mit Bremsflüssigkeit füllen, bis ein Bremsdruck mit einem vorbestimmten Mindestwert aufgebaut ist. Zugleich kann das Rekuperationssystem und/oder der Retarder eine Bremsmomentreserve für den Fall vorhalten, dass noch mehr mechanisches Bremsmoment angefordert wird und wieder eine instationäre Momentenaufbauphase entsteht. Im Falle des Rekuperationssystems kann dies auch als Rekuperationsvorhalt bezeichnet werden.

Eine Weiterbildung sieht vor, dass ein Rekuperationsbetrieb des Rekuperationssystems bereits reduziert wird, bevor eine Rekuperationsgrenze des Rekuperationssystems erreicht ist (Stellbereichsbegrenzung) und hierdurch ein Rekuperationsvorhalt als ein vorbestimmter konstanter Wert oder adaptiv mittels des Modells in Abhängigkeit von einem aktuellen Betriebszustand des Bremsaktuators eingestellt wird. Es wird also die aktuelle Aktuatordynamik oder der aktuelle Gradient, mit welchem der Bremsaktuator das mechanische Ist-Bremsmoment verändern kann oder vergrößern kann, berücksichtigt. Somit wird das Rekuperationssystem in diesem Rahmen maximal genutzt, und hierbei aber eine Bremsmomentreserve in Form des Rekuperationsvorhalts vorgehalten, der so groß ist, wie es der aktuelle Betriebszustand des Bremsaktuators erfordert.

Allerdings sollte nicht für jede angeforderte Soll-Gesamtverzögerung die mechanische Bremse in dieser Weise vorbeugend betrieben werden. Bevorzugt wird nur für eine Soll-Gesamtverzögerung größer als ein vorbestimmter Mindestwert die Soll-Gesamtverzögerung durch das Aufteilen auf ein mechanisches Soll-Bremsmoment und ein rekuperatives Soll-Bremsmoment für das Rekuperationssystem und/oder ein weiteres Soll-Bremsmoment für den Retarder aufgeteilt. Für eine Soll-Gesamtverzögerung kleiner als der Mindestwert bleibt dagegen die mechanische Bremse unbetrieben. Der Mindestwert kann beispielsweise in einem Bereich von 0,2 m/s$^2$ bis 1 m/s$^2$ liegen. Der Mindestwert ist im Folgenden auch als Mindestrekuperation bezeichnet.

Der Mindestwert kann auch geschwindigkeitsabhängig eingestellt werden. Beispielsweise kann vorgesehen sein, dass je größer die Fahrgeschwindigkeit des Kraftfahrzeugs ist, desto kleiner der Mindestwert eingestellt wird.

Bisher wurde beschrieben, dass durch die Aufteileinrichtung die Regeldifferenz oder Regelabweichung zwischen mechanischem Soll-Bremsmoment und mechanischem Ist-Bremsmoment der mechanischen Bremse durch Ansteuern des Rekuperationssystems und/oder des Retarders ausgeglichen wird. Es wird also ein Zusatzbremsmoment in Form des Kompensationsmoments erzeugt. Eine dritte Option ist ein prädiktives Verspannen - also der gleichzeitige sich vorerst kompensierende Aufbau von Antriebs- und Bremsmoment in einer Phase vor einer vermuteten Verzögerungsanforderung (z.B. bei einem assistierten Einparkvorgang oder Ausparkvorgang oder bei einer Unterschreitung eines vorbestimmten Sicherheitsabstands zu einem anderen Verkehrsteilnehmer). Bei dem tatsächlichen Aufbau von Verzögerung (Soll-Gesamtverzögerung), kann dann gleichzeitig Bremsmoment aufgebaut und Antriebsmoment abgebaut werden, sodass hier quasi eine zweite Bremsenkomponente künstlich erzeugt wird.

Es ist aber auch eine Verwendung in einem Kraftfahrzeug mit nur einer mechanischen Bremse denkbar. Hier kann durch eine aktive Verspannung des Antriebsstranges gegen die Bremse ein Vorhalt analog dem oben beschriebenen Rekuperationsvorhalt gebildet werden, der durch Reduktion des Antriebsmoments gebildet werden kann. Anwendungsmöglichkeiten hierfür bieten sich immer dann, wenn die erreichbare Aktuatordynamik der Bremse hohe Priorität gegenüber dem Kraftstoffverbrauch des Kraftfahrzeugs hat, zum Beispiel bei parkenden Systemen, einer Bordsteinüberfahrt, einem Anhängerrangierassistenten oder Positionierassistenten oder in unwegsamem Geländebetrieb. Hier kann dann vorgesehen sein, dass die mechanische Bremse zum Vorbereiten eines Bremsmanövers durch vorgeben des mechanischen Soll-Bremsmoments vorgespannt wird. Dies geschieht aber bei einer vorgegebenen Soll-Gesamtverzögerung von 0. Mit anderen Worten soll das Kraftfahrzeug gar nicht verzögert werden und dennoch die mechanische Bremse vorgespannt werden, also ein Bremsdruck größer als 0 aufgebaut werden. Als Fahrzeugkomponente kann in diesem Fall ein Antriebsmotor des Kraftfahrzeugs, also ein Verbrennungsmotor oder ein Elektromotor, angesteuert werden. Das Kompensationsmoment wird dann als zusätzlich von dem Antriebsmotor erzeugtes Antriebsmoment erzeugt. Dabei wird das Kompensationsmoment dann nicht auf die beschriebene Regelabweichung, sondern auf den Wert des mechanischen Ist-Bremsmoments eingestellt. Mit anderen Worten wird also in dem Maße, in welchem die mechanische Bremse das mechanische Ist-Bremsmoment erzeugt, diesem mittels des Antriebsmoments als Kompensationsmoment entgegen gesteuert oder entgegengewirkt. Damit bleibt es bei einer Soll-Gesamtverzögerung von 0. Dennoch ist die mechanische Bremse vorgespannt, d.h. es ist ein Bremsdruck größer als 0 aufgebaut.

Als mechanische Bremse kann eine hydraulische Bremse angesteuert werden, bei welcher sich die Aktuatordynamik mit dem begrenzten zeitlichen Gradienten durch ein Auffüllen des Bremssystems der hydraulischen Bremse mit Bremsflüssigkeit in der Momentenaufbauphase ergibt. Das Bremssystem kann z.B. eine Bremsleitung umfassen.

Das beschriebene Modell ist insbesondere in der Weise ausgelegt oder eingerichtet, dass ein Funktionszusammenhang oder ein funktionaler Zusammenhang von gefördertem Bremsflüssigkeitsvolumen und hierdurch bewirktem Bremsdruck auf der Grundlage eines Polynoms zweiter Ordnung angenähert wird. Hierdurch ergibt sich eine mit geringem Berechnungsaufwand durchführbare Berechnungsvorschrift für den zeitlichen Gradienten. Somit kann auch mittels eines Mikrocontrollers, der eine einfache Berechnungseinheit aufweisen kann, der zeitliche Gradient berechnet werden. Alternativ zur Verwendung eines Modells kann auch das Messen des Bremsdrucks vorgesehen sein. Das geförderte Bremsvolumen kann als Funktion der Zeitdauer und einer Drehzahl der Bremsdruckpumpe berechnet werden.

Die Aufteileinrichtung kann mittels einer Steuervorrichtung für ein Kraftfahrzeug bereitgestellt werden. Entsprechend umfasst die Erfindung auch diese Steuervorrichtung, die zum Beispiel als Steuergerät ausgestaltet sein kann. Die Steuervorrichtung kann eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikrocontroller und/oder zumindest einen Mikroprozessor aufweisen. Das Verfahren kann dann auf der Grundlage eines Programmcodes bereitgestellt werden, der bei Ausführen durch die Prozessoreinrichtung das Verfahren durchführt.

Im Folgenden ist ein Ausführungsbeispiel der Erfindung beschrieben. Hierzu zeigt:

Fig. 1 eine schematische Darstellung einer Ausführungsform eines Kraftfahrzeugs mit einer erfindungsgemäßen Steuervorrichtung;

Fig. 2 ein Diagramm mit schematisierten Verläufen von Signalen, wie sie sich bei einem Betrieb des Kraftfahrzeugs von Fig. 1 auf der Grundlage einer Ausführungsform des erfindungsgemäßen Verfahrens über der Zeit t ergeben können; und

Fig. 3 ein Diagramm mit einem schematisierten Verlauf einer Abhängigkeit von Bremsdruck und gefördertem Bremsflüssigkeitsvolumen der Bremsanlage.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

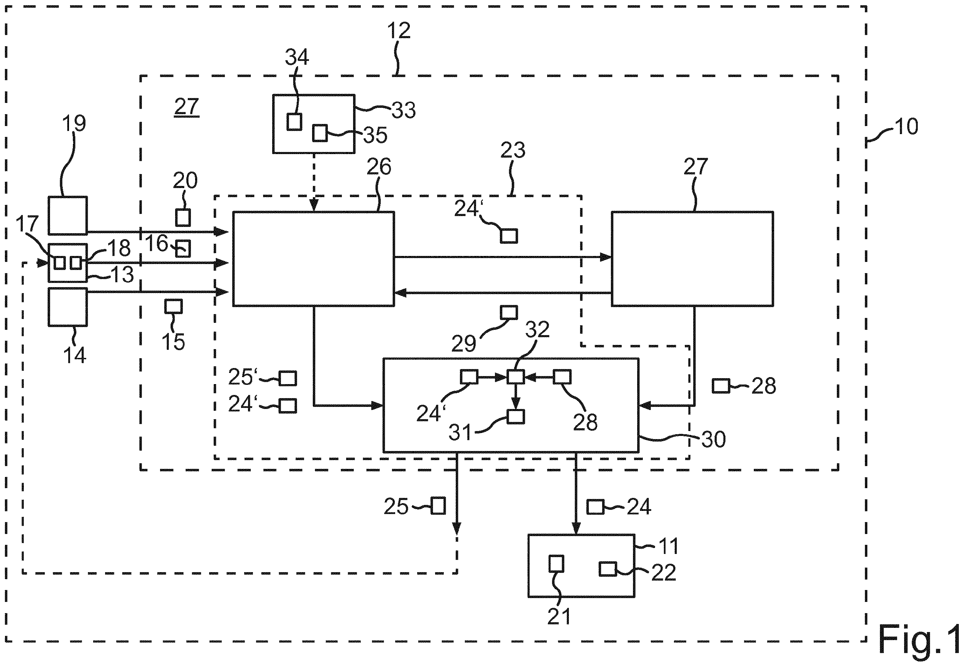

Fig. 1 zeigt ein Kraftfahrzeug 10, bei dem es sich um einen Kraftwagen, insbesondere einen Personenkraftwagen oder Lastkraftwagen handeln kann. Schematisch dargestellt ist eine mechanische Bremse 11, die durch eine Steuervorrichtung 12 gesteuert werden kann. Die Bremse 11 kann ein hydraulisches Bremssystem mit Reibbremsen für Räder des Kraftfahrzeugs 10 sein. Das Kraftfahrzeug 10 kann des Weiteren ein Rekuperationssystem 13 aufweisen, das in der Fig. 1 allgemein eine von der Bremse 11 verschiedene Fahrzeugkomponente zum Erzeugen eines Kompensationsmoments repräsentiert. Des Weiteren ist ein Fahrerassistenzsystem 14 dargestellt, dass ein Eingriffssignal 15 zum signalisieren eines Bremseingriffs an die Steuervorrichtung 12 signalisieren kann. Das Fahrerassistenzsystem kann z.B. ein ESC sein. Das Rekuperationssystem 13 kann ein Rekuperationssignal 16 an die Steuervorrichtung 12 signalisieren, durch welches es eine verfügbare Rekuperationskapazität signalisiert. Das Rekuperationssystem 13 kann einen elektrischen Generator 17 und ein elektrisches Speichersystem 18, beispielsweise eine Batterie, umfassen. Des Weiteren kann das Kraftfahrzeug 10 einen Geschwindigkeitsregelautomaten und/oder Abstandsregelautomaten, oder allgemein einen Triebstrangkoordinator 19 (TSK) aufweisen, durch welchen automatisiert, d.h. ohne ein Zutun eines Fahrers, eine Soll-Gesamtverzögerung 20 an die Steuervorrichtung 12 signalisiert werden kann. Beispielsweise kann hierdurch eine Fahrgeschwindigkeit des Kraftfahrzeugs 10 auf eine Sollgeschwindigkeit größer als 0 oder ein Abstand des Kraftfahrzeugs 10 zu einem vorausfahrenden Kraftfahrzeug auf einen Soll-Abstand eingeregelt werden. Im Unterschied dazu signalisiert das Fahrerassistenzsystem 14 einen Bremseingriff, der das Kraftfahrzeug 10 unabhängig von einer Zielgeschwindigkeit verlangsamen soll, insbesondere zum Stillstand bringen soll. Der TSK 19 regelt dagegen insbesondere auf eine Sollgeschwindigkeit größer als Null ein.

Zu Umsetzen oder Realisieren der Soll-Gesamtverzögerung 20 kann die Steuervorrichtung 12 die mechanische Bremse 11 und das Rekuperationssystem 13 nutzen oder ansteuern. Die mechanische Bremse 11 kann einen Regler 21 und einen Bremsaktuator 22 aufweisen, der durch den Regler 21 angesteuert wird. Dem Regler 21 kann eine Aufteileinrichtung 23 ein Soll-Bremsmoment 24 vorgeben, dass der Regler 21 mittels des Bremsaktuators 22 einregeln soll. Die Aufteileinrichtung 23 kann zusätzlich zu dem mechanischen Soll-Bremsmoment 24 auch ein rekuperatives Soll-Bremsmoment 25 für das Rekuperationssystem 13 vorgeben oder signalisieren. Die Aufteileinrichtung 23 kann ein Betriebsprogramm einer Prozessoreinrichtung 27 der Steuervorrichtung 12 sein.

Das Aufteilen der Soll-Gesamtverzögerung 20 in die beiden Soll-Bremsmomente 24, 25 kann in der Aufteileinrichtung 23 in einem ersten Schritt durch einen strategischen Verteiler 26 erfolgen. Der strategische Verteiler 26 kann ein Programmmodul des Betriebsprogramms sein. Der strategische Verteiler 26 kann in an sich bekannter Weise ausgestaltet sein, d.h. eine Aufteilung in ein strategisches rekuperatives Soll-Bremsmoment 25' und ein strategisches mechanisches Soll-Bremsmoment 24' anhand von an sich bekannten Kriterien, wie beispielsweise der Maximierung der Wirtschaftlichkeit des Betriebs des Kraftfahrzeugs 10, vornehmen. Zudem kann dem Bremseingriff des Fahrerassistenzsystems 14 in Abhängigkeit von dem Signal 15 und/oder der Betätigung eines Bremspedals (nicht dargestellt) dahingehend ein Vorrang eingeräumt werden, dass eine entsprechende Bremsanforderung mittels eines mechanischen Soll-Bremsmoments 24 umgesetzt wird, also keine rekuperative Bremsung erfolgt oder diese graduell auf 0 reduziert wird.

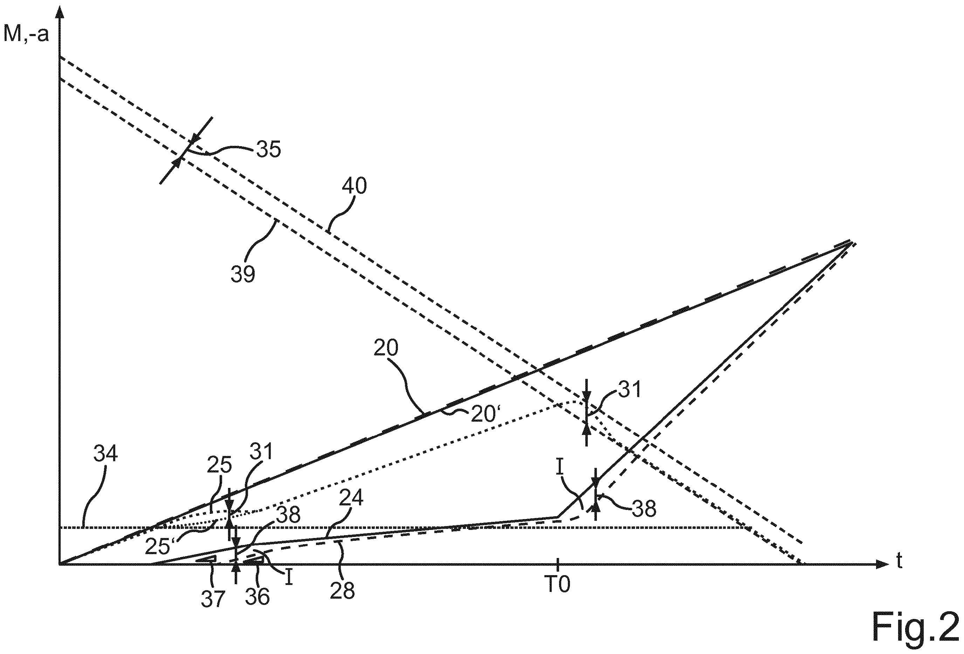

Um die mechanische Bremse 11 reaktionsbereitzuhalten und/oder eine Aktuatordynamik des Bremsaktuators 22 beim Umsetzen des mechanischen Soll-Bremsmoments 24 zu berücksichtigen, kann mittels eines Modells 27 für das aktuelle strategische mechanische Soll-Bremsmoment 24' ermittelt werden, welches mechanische Ist-Bremsmoment 28 mittels des Bremsaktuators 22 beim aktuell bereitstehenden Bremsdruck in der mechanischen Bremse 11 bereitgestellt werden kann. Des Weiteren können Parameter für eine Vorhaltsberechnung eines Rekuperationsvorhalts die im Folgenden im Zusammenhang mit Fig. 2 beschrieben, anhand des Modells 27 und der damit berechneten mechanischen Ist-Bremsmoments 28 als Parameter 29 an den strategischen Verteiler 26 signalisiert werden.

Eine Aktuatoraufteilung 30 kann dem strategischen rekuperativen Soll-Bremsmoment 25' einen Wert für ein Kompensationsmoment 31 hinzufügen, um das rekuperative Soll-Bremsmoment 25 als Vorgabe für das Rekuperationssystem 27 einzustellen. Das Kompensationsmoment 31 kann durch einen Vergleich 32 des strategischen mechanischen Soll-Bremsmoments 24' mit dem tatsächlich bereitstellbaren mechanischen Ist-Bremsmoment 28, wie es das Modell 27 signalisiert, ermittelt werden.

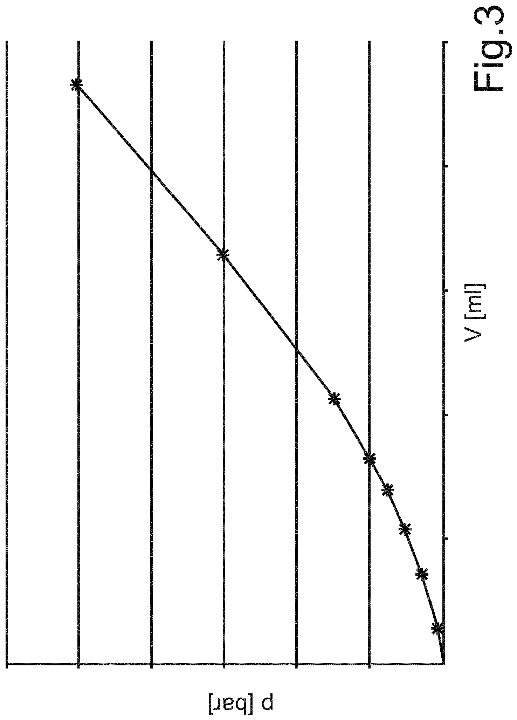

Das Modell 27 ist im Folgenden im Zusammenhang mit Fig. 3 beschrieben.

Der strategische Verteiler 26 kann des Weiteren zum Beispiel aus einem Datenspeicher 33 weitere Parameter für den Betrieb empfangen, beispielsweise einen Wert für eine Mindestrekuperation 34 und eine Zuordnung 35 für einen Rekuperationsanteil in Abhängigkeit von einer Fahrgeschwindigkeit des Kraftfahrzeugs 10.

Fig. 2 veranschaulicht noch einmal den Zusammenhang in einem Diagramm, in welchem über der Zeit t die signalisierten Bremsmomente und die sich ergebenden Bremsmomente als Zeitsignale des Bremsmoments M und der Verzögerung -a (negative Beschleunigung a) aufgetragen sind. Zu der signalisierten Soll-Gesamtverzögerung 20 ergibt sich die Ist-Gesamtverzögerung 20', die von der Steuervorrichtung 12 auf dem Verlauf der Soll-Gesamtverzögerung 20 in allen Situationen gehalten werden kann.

Unterhalb der Mindestrekuperation 34 kann die Ist-Gesamtverzögerung 20' auf der Grundlage des Rekuperationssystems 13 erfolgen, d.h. es wird ein entsprechendes strategisches rekuperatives Soll-Bremsmoment 25' signalisiert. Bei einer Soll-Gesamtverzögerung 20 oberhalb oder größer als die Mindestrekuperation 34 kann durch Vorgeben des mechanischen Soll-Bremsmoments 24 die mechanische Bremse 11 vorgespannt oder aktiviert werden, sodass der Bremsaktuators 22 einen Bremsdruck aufbaut. Dies erfolgt aber mit einer begrenzten Aktuatordynamik, sodass ein zeitlicher Gradient 36 des ist Bremsmoments 28 kleiner ist als ein zeitlicher Gradient 37 des vorgegebenen mechanischen Soll-Bremsmoments 24. Es ergibt sich im Regler 21 eine Regelabweichung 38. Es ergibt sich beim Aufbau des Bremsdrucks eine instationäre Momentenaufbauphase I mit einer Regelabweichung 38. Allerdings wird mittels des Modells 27 das mechanische Ist-Bremsmoment 28 prädiziert, sodass die Regelabweichung 38 durch vorgeben des Kompensationsmoments 31 und dem daraus resultierenden rekuperativen Soll-Bremsmoment 25 (strategisches Soll-Bremsmoment 25' + Kompensationsmoment 31) derart ausgeglichen werden kann, dass sich insgesamt die Soll-Gesamtverzögerung 20 als Ist-Gesamtverzögerung 20' ergibt.

In Fig. 2 ist beispielhaft angenommen, dass es zu einem Zeitpunkt T0 zu einem Abbruch der Rekuperation kommt, weil das Rekuperationssystem 13 durch das Rekuperationssignal 16 z.B. signalisiert, dass keine elektrische Energie mehr aufgenommen werden kann. Zum Zeitpunkt T0 ist eine Rekuperationsgrenze 39 erreicht und nun, obwohl weiterhin Verzögerungsmoment/- kraft gemäß der Soll-Gesamtverzögerung 20 aufgebaut wird, über den Abbau der Geschwindigkeit bzw. den Fortschritt der Zeit sogar, der Rekuperationsgrenze 39 folgend oder diese einhaltend, Rekuperationsmoment abgebaut oder verringert wird. T0 ergibt sich daher aus dem Schnittpunkt von 25 und 39.

Hierbei wird aber der Rekuperationsvorhalt 35 berücksichtigt, d.h. der Abbruch der Rekuperation erfolgt früher als es eine tatsächlich verfügbare Rekuperation 40 zulassen würde, um beim weiteren Vergrößern des mechanischen Soll-Bremsmoments 24 mittels des Rekuperationssystems 13 den weiter entstehenden Regelfehler oder die Regelabweichung 38 nach dem Beenden oder Ausrampen der Rekuperation weiterhin mittels des Rekuperationsvorhalts 35 des Rekuperationssystems 13 durch Erzeugen des Kompensationsmoments 31 erzeugen zu können. Mit anderen Worten wird die Rekuperation schon durch das strategische rekuperativer Bremsmoment 25' bei einer strategischen Rekuperationsgrenze 39, die kleiner als die tatsächlich verfügbare Rekuperation 40 ist, abgebrochen.

Bei dem Zeitpunkt T0 ist zudem die Regelabweichung 38 schon dadurch reduziert, dass im Vergleich zu einem Anlauf der Bremse von einem Bremsdruck 0 die Bremse 11 schon vorgespannt ist, weil sie ab dem Mindestrekuperationswert 34 bereits aktiviert wurde.

Zum Zeitpunkt T0 beginnt das Ausrampen der Rekuperation und durch Vergrößern des mechanischen Soll-Bremsmoments 24 wird der Anteil der mechanischen Bremse 11 an der Ist-Gesamtverzögerung 20' vergrößert, bis er 100% beträgt.

Statt der einfachen arithmetischen Aufteilung erfolgt die Implementierung der fortan noch einmal genauer beschriebenen Aufteileinrichtung, die durch die Steuervorrichtung von Fig. 1 bereitgestellt ist, also nach einem zusätzlichen Kriterium.

Der strategische Verteiler 26 definiert ein für den aktuellen Betriebszustand sinnvolles Rekuperationsmoment aus einem Mindestrekuperationsmoment 34 (aus Komfort und Effizienzgründen), einer beispielsweise geschwindigkeitsabhängigen Rekuperationsgrenze, mit deren Hilfe sichergestellt wird, dass eine Rekuperation zu niedrigen Geschwindigkeiten hin herausgefahren wird, sowie einem strategischen Rekuperationsvorhalt 35.

Der strategische Verteiler extrapoliert außerdem den Gradienten der Anforderung und bewertet beispielsweise wann und in welchem Maße die mechanische Bremse angesteuert würde, wenn der Eingangsgradient konstant wäre. Daraus bildet der Verteiler abhängig von beispielsweise der Eingangsdynamik der Soll-Gesamtverzögerung 20, dem aktuellen Ist-Bremsmoment 28 auf dem mechanischen Pfad (Reibbremse) und Parametern aus dem Aktormodell 27 der Reibbremse 11 einen Rekuperationsvorhalt 35 (Rekuperationsreserve), um das Instationärverhalten der mechanischen Bremse 11 damit kompensieren zu können. Zusätzlich zur Extrapolation kann auch eine feste Reserve vorgehalten werden.

Falls ein Fahrdynamikregeleingriff vorliegt, verlagert der strategische Verteiler das durch den Eingriff der Rekupertion entzogene Bremsmoment in die mechanische Bremse und hält es für den aktuellen Verzögerungsvorgang mit Hilfe einer Schleppzeigerlogik (Peak-Hold) dort bis die Verzögerung vom Anforderer abgebaut wird. Optional kann ein langsames Rückverlagern aus dem Peak-Hold in die Rekuperation konfiguriert werden, wenn der Eingriff vorbei ist. Bei der Verlagerung in die mechanische Bremse kann der strategische Verteiler seinen eigentlichen Rekuperationswunsch weiter anzeigen, um eine mögliche Vorsteuerung einer Fahrdynamikregelung nicht zu gefährden.

Das Modell 27 für einen langsamen Bremsaktuator 22 stellt das Zeitverhalten der mechanischen Bremse möglichst genau nach. Ein einfaches Modell könnte z.B. über einen Tiefpass erster Ordnung (PT1-Glied) umgesetzt werden. Ein besseres Modell beschreibt über eine quadratische Näherung des Bremsenverhaltens gemäß Fig. 3. Existiert systemseitig eine Rückmeldung über die tatsächlich gestellte/umgesetzte Bremskraft, so wird diese direkt eingelesen und durchgeleitet. Trotzdem kann es sinnvoll sein, das Modell parallel weiter zu berechnen, da es nicht nur ein Ist-Bremsmoment, sondern aufgrund seiner einfachen mathematischen Ableitbarkeit auch einen verfügbaren Druckgradienten oder auch Bremsmomentengradienten bei gegebenem Druck oder Bremsmoment liefert. Diese Information ist wertvoll für den strategischen Verteiler um seinen Rekuperationsvorhalt genauer berechnen zu können.

Die Aktorik-Aufteilung 30 berechnet mit den Sollwerten aus dem strategischen Verteiler sowie der Rückmeldung aus dem Modell des langsamen Aktors die Aktorik-Aufteilung je ein rekuperatives und ein mechanisches Soll-Bremsmoment.

Für die Berechnung des rekuperativen Soll-Bremsmomentes wird zum strategischen Rekuperations-Sollmoment dasjenige Bremsmoment hinzuaddiert, welches auf dem mechanischen Pfad bereits angefordert, jedoch noch nicht umgesetzt ist.

Der beschriebene Ansatz zur Aufteilung der Bremsmomente berücksichtigt verschiedene Anforderungen an den Verzögerungsvorgang, die im Folgenden diskutiert und erklärt werden.

Priorisierung der Rekuperation

Kleine Verzögerungen werden rekuperativ durchgeführt und sind damit besonders effizient. Außerdem wird durch die Nutzung der Rekuperation im Bereich kurz unterhalb der Beschleunigungs-Nulllage des Fahrzeugs im Vergleich zur mechanischen Bremse mit Hydraulikpumpe ein deutlich erhöhter Verzögerungskomfort für den Fahrer erreicht, der erfahrungsgemäß gerade in diesem Bereich sehr kleiner Verzögerung besonders empfindlich auf Stufigkeit im Ruckverlauf, Ventilklacken und Laufgeräusch der Hydraulikpumpe reagiert.

Vorkonditionierung des mechanischen Bremsaktuators

Die mechanische Bremse wird nach dem Aufbrauchen der Mindestrekuperation mit vergleichsweise niedrigem Gradienten auf ein definiertes Momenten- und somit Druckniveau gebracht. Durch den geringen Druckgradienten zu Beginn ergibt sich ein vorteilhafter, da akustisch besonders unauffälliger, Pumpenlauf. Das definierte Druckniveau, das besonders vorteilhaft unter Berücksichtigung der Aktorparameter aus dem Modell der Bremsanlage und unter Berücksichtigung der Anforderungsdynamik gebildet wird, sorgt einerseits für eine deutliche Verbesserung des Folgeverhaltens der mechanischen Bremse und somit für eine teilweise (je nach Auslegung bis zu fast vollständige) Vermeidung des Instationärverhalten bei Erreichen der Rekuperationsgrenze. Außerdem wird eine Verschmutzung und Korrosion der Bremsscheiben verhindert.

Durch den Aufbau eines mechanischen Verzögerungsanteils nach Erreichen einer definierten Mindestrekuperation wird für den Fahrer das Bremspedalgefühl, das maßgeblich vom bereits im Bremssystem vorhandenen Druck abhängt, reproduzierbar: Bei identischer Verzögerung (in Bezug auf die Ausrollverzögerung des Fahrzeugs) ergibt sich immer das identische Pedalgefühl.

Ausgleich des Instationärverhaltens in der Momentenaufbauphase I

Zusätzlich zur Aufteilung des Summenmomentes auf beide zur Verfügung stehenden Verzögerungsaktoren werden auch die Performanceeinschränkungen der elektrisch betätigten, mechanischen Bremse, die von Druck und verfügbarem Gradient abhängen, weitestgehend beseitigt. Dies geschieht durch temporäre, zusätzliche Beaufschlagung der mittels Modell oder Messung ermittelten Abweichung zwischen mechanischem Soll- und Istbremsmoment auf dem rekuperativen Bremspfad. Hierbei handelt es sich im Prinzip um einen Instationärausgleich analog der Aufteilung von Antriebsmomenten bzw. Antriebskräften zwischen Verbrennungskraftmaschine und Elektromaschine(n) in Hybridfahrzeugen, jedoch mit Wirkung bzw. Aufteilung zwischen Rekuperation und Reibbremse. Ein "reservierter" Rekuperationsbereich, hier als "Rekuperationsvorhalt" bezeichnet, der dem strategischen Verteiler nicht zur Anforderung von Rekuperation zur Verfügung steht, stellt sicher, dass der Aktorikverteiler einen großen Teil des noch nicht aufgebauten, mechanischen Bremsmomentes kurzfristig rekuperativ nachstellen kann.

Der Rekuperationsvorhalt selbst kann konstant oder in Abhängigkeit des Betriebspunktes, z.B. von Gradient und aktuellem Summen-Sollbremsmoment, gebildet werden. In einer besonders vorteilhaften Umsetzung werden bei der Bildung des Rekuperationsvorhaltes das Aktormodell bzw. dessen Parameter und das während der Vorkonditionierungsphase bereits aufgebaute, mechanische Bremsmoment bzw. Druckniveau berücksichtigt. Das kann dazu führen, dass bei niedrigem Druckniveau der Vorhalt sehr groß ist und umgekehrt bei bereits hohem, erreichtem Druckniveau in der mechanischen Bremse nur noch ein sehr kleiner Vorhalt notwendig wird. In einer weiteren vorteilhaften Umsetzung kann dieser TradeOff (wenig Rekuperationsvorhalt, aber höheres Druckniveau gegenüber viel Rekuperationsvorhalt mit niedrigem Druckniveau aus der Vorkonditionierung) der Steuervorrichtung (Fig. 1) als Parameter vom Verzögerungsanforderer mit übergeben werden.

Das Verfahren funktioniert besonders gut, wenn er zum Zeitpunkt seiner Aktivität der einzige Verteiler von Verzögerungskraft bzw. Bremsmoment ist - sein Eingangssignal muss dementsprechend bereits arbitriert sein. Bei einer gängigen Implementierung der Fahrassistenzsysteme ist dies unproblematisch, weil die gesamte Reglerkette, insbesondere der der Steuervorrichtung vorgelagerte, dynamische Regler, in der Regel für alle Anforderer auf derselben physikalischen Ebene mehrfach genutzt wird und somit bereits selbst mit einem arbitrierten Signal versorgt wird.

Der automatische Instationärausgleich sowie bei besonders vorteilhafter Umsetzung auch die Berechnung des Ziel-Verzögerungsmomentes in der Vorkonditionierungsphase und der Rekuperationsvorhalt hängen von der Güte des Bremsdruck/Verzögerungsmodells ab.

Im Zweifel kann es dazu kommen, dass die von der Steuervorrichtung gewählten Parameter für den idealen Verzögerungsverlauf nicht das Optimum darstellen und somit je nach Richtung der Abweichung Effizienz oder Instationärausgleich nicht optimal erreicht werden. Eine spürbare Verbesserung wird aber sicher erreicht.

Der Instationärausgleich selbst hängt nicht nur von den erreichbaren Gradienten der mechanischen Bremse, sondern auch vom absoluten, bereits gestellten Bremsmoment bzw. eingeschlossenem Druck ab. Wie in der im Zusammenhang von Fig. 3 noch erläuterten Herleitung des Bremsdruckmodells beschrieben, sind zahlreiche Vereinfachungen in diesem, hier zur Nutzung vorgeschlagenem Modell getroffen worden. Aufgrund dieser Einschränkungen könnte ein Instationärausgleich dazu führen, dass das Summenbremsmoment temporär zu niedrig unzureichender Ausgleich) oder zu hoch (Instationärverhalten überkompensiert) ausfällt. Dieser Effekt lässt sich durch mehrere Maßnahmen abmildern: Einerseits führt eine gewissenhafte Parametrierung des Modells zu höherer Qualität der berechneten Werte, andererseits kann in höheren Fahrzeugklassen manchmal ein für den Istwert des gestellten Bremsmomentes durch die Bremse selbst zur Verfügung gestellter, mit Drucksensorik abgeglichener Wert eingelesen werden. Bei Verwendung dieses Wertes wird das Modell nur noch für die Berechnung der erreichbaren Gradienten benötigt, was den Instationärausgleich noch robuster gegen Modellfehler macht (was explizit nicht bedeutet, dass ein rein auf dem beschriebenen Modell basierender Instationärausgleich problematisch ist). In der Praxis überwiegt die erreichte Verbesserung des Verzögerungsverhaltens auch im rein modellbasierten Ansatz Effekte durch getroffene Modellvereinfachungen bei weitem.

Für den Fall der Regeleingriffe eines Fahrdynamikreglers mit Reduktion der verfügbaren Rekuperation gilt, da die Fahrdynamikregelsystem in der Regel reaktive Systeme sind, dass der geschaffene Rekuperationsvorhalt schlimmstenfalls vollständig wirkungslos ist und gleichzeitig das gesamte rekuperativ gestellte Verzögerungsmoment in die mechanische Bremse umverteilt werden muss. Bei geschickter Wahl der Mindestrekuperation (Fig. 2) ist mit hoher Wahrscheinlichkeit zum Zeitpunkt des Eingriffs bereits ein mechanisches Bremsdruckniveau zur Vorkonditionierung erreicht, was bereits für eine deutliche Erhöhung des verfügbaren Verzögerungsgradienten der mechanischen Bremse sorgt. Daher profitiert auch der Fall "Umverteilung wegen Fahrdynamikregelung" deutlich vom hier vorgestellten Konzept - nur eben mangels verfügbarem Instationärausgleich nicht vollständig. Für den selteneren Fall des Fahrdynamikregeleingriffs im Aufbaubereich der Mindestrekuperation verhält sich das Fahrzeug dann wie ein Fahrzeug ohne zweites Bremssystem. Dadurch, dass sich der Bereich "Aufbau der Mindestrekuperation" jedoch am Anfang des Verzögerungsmanövers bei vergleichsweise geringer Verzögerung über Grund befindet, ist das Verhalten immer noch günstiger als ein ähnlicher Eingriff bei höherer Verzögerung. Es sei hier auch relativierend erwähnt, dass der hier erwähnte Eingriff des Fahrdynamikreglers ja gerade zum Ziel hat die durch Rekuperation verzögerte(n) Achse(n) zu entbremsen, um die Querführung über die Längsführung zu priorisieren. Der Verlust an Bremsweg durch diese Eingriffe ist gerade im Bereich einer sinnvoll gewählten Mindestrekuperation gleichermaßen gering und unvermeidbar (solange die Regeleingriffe nicht vorhersehbar sind).

Auch wenn das hier beschriebene Ausführungsbeispiel des Verzögerungsmomenten-Aufteilers hauptsächlich im Kontext der Assistenzsysteme beschrieben ist (weil die Problemstellung entsprechend formuliert war), ist die Verwendung nicht auf diesen Bereich beschränkt.

Im Sinne einer durchgängigen Fahrzeugarchitektur könnten in einem ersten Schritt auch weitere Anforderungen an eine elektronisch kommandierte Verzögerung über diesen Verteiler gestellt werden. In einem zweiten Schritt könnte z.B. auch ein Brake-by-Wire System die Anforderungen aus einem "Pedalsimulator" oder "Joystick" über diesen Verteiler auf die verfügbaren Bremsaktoren aufteilen.

Auch die Einschränkung auf Rekuperation und elektrohydraulische, mechanische Bremse ist nicht erforderlich. Tatsächlich kann, ein geeignetes Modell des langsameren Aktors oder beider Aktoren vorausgesetzt, das Verfahren auch auf weitere Bremssysteme angewandt werden. Ein Beispiel wäre die Aufteilung der Verzögerung zwischen Retarder und Betriebsbremse in einem Nutzfahrzeug. Im Falle des Retarders würde nicht die Energierückgewinnung, sondern die Reduktion der TCO (Total-Cost-Of-Ownership) durch sparsamen Umgang mit der verschleißbehafteten Betriebsbremse im Vordergrund stehen.

Auch eine Verwendung in einem konventionellen Fahrzeug mit nur einem Bremssystem ist denkbar: Hier könnte durch aktive Verspannung des Antriebsstrangs gegen die Bremse ein Vorhalt analog dem oben beschriebenen Rekuperationsvorhalt gebildet werden, der durch Reduktion des Antriebsmomentes genutzt werden kann. Anwendungsmöglichkeiten hierfür bieten sich immer dann, wenn erreichbare Bremsdynamik hohe Priorität gegenüber Verbrauch hat - zum Beispiel bei parkenden Systemen, einer Bordsteinüberfahrt, Anhängerrangier- oder Positionierassistenten oder unwegsamem Geländebetrieb.

In Fig. 3 ist dargestellt, wie der Druckanstieg im hydraulischen System der Bremsanlage wiederum bekanntermaßen nicht linear, sondern der jeweiligen p-V-Kennlinie des Bremssystems (p - Bremsdruck, V - Volumen der geförderten Bremsflüssigkeit) folgt.

Jedes Bremssystem hat eine Kennlinie, die Druck und Volumen im System miteinander in Beziehung setzt. Diese Kennlinie kann für eine Bremse vermessen werden. Zusätzlich können über die Bremsenentwicklung ebenfalls die für Bremsanforderungen zulässige Pumpendrehzahl und die Pumpengeometrie oder direkt das Fördervolumen pro Hub bezogen werden.

Aus der Literatur oder ebenfalls von der Bremsenentwicklung kann ebenfalls der Koeffizient bezogen werden, mit dem ein Sollbremsmoment in der Bremse in einen Druck umgerechnet wird.

Wie die Fig. 3 zeigt, weist der Bremsdruck über dem Volumen aufgetragen einen in erster Näherung parabelförmigen Verlauf auf.

Zur Vereinfachung und um einen kontinuierlichen formelmäßigen Zusammenhang zu erzeugen (den man nachher auch mathematisch ableiten kann, denn wir interessieren uns ja in erster Linie für den erreichbaren Druckgradienten), wird eine quadratische Gleichung

$$p(v) = av^2 + bv + c$$

unterstellt. Mit der Methode der kleinsten Quadrate werden dann die Koeffizienten der Gleichung ermittelt. Der quadratische (a) und lineare (b) Koeffizient kann bestimmt werden. Der Achsenabschnitt (c) wird dabei fest mit "0" angenommen, was angesichts der Größenordnungen in Druck in denen wir uns im regelmäßigen Betrieb befinden eine zulässige Vereinfachung ist.

Es folgt die Herleitung von den verwendeten Formeln. Gesucht ist der verfügbare Momentengradient der Bremse in Abhängigkeit des bereits gestellten Bremsmoments $\frac{dM_B}{dt}(M_B)$ . Führt man das geforderte Bremsmoment mit dem hier zu berechnenden Gradienten nach, so kann leicht auch das aktuelle Bremsmoment laut Modell mitgerechnet werden.

Gegeben:

- Druck-Volumen Kennlinie (p-V-Kennlinie) der Bremse, somit Koeffizienten a,b der zugrunde gelegten quadratischen Gleichung

- Zusammenhang Druck-Moment der Bremse: $c_{Bremse}$

- Geometrie der Pumpe; Volumen pro Hub: $c_{Pumpe}$

- Zulässige Pumpendrehzahl: $n_{Pumpe}$

Es ist:

$$p(v) = av^2 + bv$$

Somit:

$$v(p) = \pm \frac{1}{2a}(\sqrt{4ap + b^2} - b)$$

Und:

$$\frac{dp}{dv} = 2a \cdot v + b$$

... positives v(p) einsetzen...

$$\frac{dp}{dv}(p) = \sqrt{4a \cdot p + b^2}$$

Die Pumpenparameter lassen sich zum verfügbaren Volumenstrom der Pumpe verrechnen; es gilt:

$$\dot{V} = \frac{dV}{dt} \approx n_{Pumpe} \cdot c_{Pumpe} - p_{ist} \cdot c_{Leckage}$$

...Wir setzen vereinfachend die Leckage zu "0"...

$$\frac{dV}{dt} = n_{Pumpe} \cdot c_{Pumpe} = c_{v,Pumpe}$$

Es gilt:

$$\frac{dp}{dt} = \frac{dp}{dV} \cdot \frac{dV}{dt}$$

Eingesetzt:

$$\frac{dp}{dt} = \sqrt{4a \cdot p + b^2} \cdot c_{v,Pumpe}$$

...und mit gegebenem Druck-Momenten Zusammenhang $c_{Bremse}$

$$\frac{dM_B}{dt} = c_{Bremse} \cdot \frac{dp}{dt} = \sqrt{4a \cdot p + b^2} \cdot c_{v,Pumpe} \cdot c_{Bremse}$$

Die getroffenen Vereinfachungen sind:

1) der Leerweg der Bremse (Abstand zwischen Bremsbelag und Scheibe) wird nicht berücksichtigt

==> Effekte dadurch werden als Störgröße vom Regler abgefangen

2) Verschleißeffekte der Bremse bleiben unberücksichtigt ==> das Modell berücksichtigt nur eine ideale Bremse. Bei verschlissener Bremse können Abweichungen vom Regler abgefangen werden.

3) Leckverluste der Pumpe bleiben unberücksichtigt, sofern deren linearer Anteil nicht im spezifizierten Fördervolumen pro Hub enthalten ist

4) Temperatur/Nässe/Temperatureinflüsse auf den Reibkoeffizienten der Bremse werden vernachlässigt

5) Der Druckregler in der Bremsanlage arbeitet optimal, nutzt die maximale Pumpendrehzahl also aus, wenn es eine bestimmte Regeldifferenz gibt (die parametrierbar berücksichtigt werden kann, z.B. durch einen einstellbaren Maximalwert)

6) Die Anlaufgeschwindigkeit der Pumpe ist zu vernachlässigen (tatsächlich im Bereich kleiner als 100 ms)

7) Fahrdynamik- und Schlupfregelung bleiben unberücksichtigt. Das Modell geht in diesem Fall tendenziell von einem zu hohen Druck aus. Allerdings kann in diesen Situationen ein vorteilhaft integrierter Regler über die Bedingung des Schlupfregeleingriffes eingefroren werden.

Diese Vereinfachungen können allesamt deshalb getroffen werden, weil ihre Berücksichtigung im Vergleich mit Ihrer Nichtberücksichtigung zu einem niedrigeren möglichen Gradienten führen würden.

Für den Fall der Fahrdynamikregelung ist alternativ eine Deckelung des verfügbaren Gradienten auf "0" denkbar.

Benutzt man diese Information also zur Berechnung eines Einfrierkriteriums für den Regler, so würde das Einfrieren im Vergleich mit einem Konzept ohne diese Vereinfachungen verspätet stattfinden und somit einen gewissen WindUp (Reglerübersteuerung) zulassen. Dies ist unkritisch aus folgenden Gründen:

1) Der verfügbare Bremsdruckgradient steigt nichtlinear mit dem geförderten Volumen. Ein nicht erreichbarer Druckgradient ist im Verlauf des weiteren Druckaufbaus immer irgendwann erreichbar.

2) Für den Fall das kein weiterer Druckaufbau stattfinden soll (Bremsanforderung konstant), wird der im ESC enthaltene Druckregler dennoch weiterregeln, bis der angeforderte Bremsdruck erreicht ist.

3) Für den Fall dass der Druckregler des ESC bedingt durch ein dem Verschleißzustand der Hardware nicht ausreichend Rechnung tragenden Druckmodell einen durch nicht erreichte Gradienten statischen Druckfehler nicht ausregeln kann, wird der übergeordnete kinematische Beschleunigungsregler diesen Fehler als zusätzlichen Regelfehler in der Verzögerung ausregeln.

Die Verwendung von Parametern einer verschlissenen Bremsanlage führt dann nicht zu einem Fehlverhalten der Reglerkette, lediglich zu einem konservativerem, früheren Einfrieren des Integralreglers in dynamischen Situationen mit der einzigen Konsequenz einer möglicherweise größeren statischen bzw. quasistatischen Regelabweichung in dieser dynamischen Situation (Vorsteuerung und P-Anteil sind nach wie vor aktiv).

Insgesamt zeigt das Beispiel, wie durch die Erfindung ein Verfahren zur variablen Bremsmomentaufteilung von Assistenzfunktionen zwischen mechanischer und rekuperativer Bremsung bereitgestellt werden kann.

**Bezugszeichenliste**

| | |
|---|---|
| 10 | Kraftfahrzeug |
| 11 | Mechanische Bremse |
| 12 | Steuervorrichtung |
| 13 | Rekuperationssystem |
| 14 | Fahrerassistenzsystem |
| 15 | Signal |
| 16 | Rekuperationssignal |
| 17 | Elektrischer Generator |
| 18 | Elektrischer Energiespeicher |
| 19 | Triebstrangkoordinator |
| 20 | Soll-Gesamtverzögerung |
| 21 | Regler |
| 22 | Bremsaktuator |
| 23 | Aufteileinrichtung |
| 24 | Mechanisches Soll-Bremsmoment |
| 24' | Strategisches mechanisches Soll-Bremsmoment |
| 25 | Rekuperatives Soll-Bremsmoment |

25' Strategisches rekuperatives Soll-Bremsmoment
26 Strategischer Verteiler
27 Modell
28 Mechanisches Ist-Bremsmoment
29 Parameter
30 Aktuatoraufteilung
31 Kompensationsmoment
32 Vergleich
33 Datenspeicher
34 Mindestrekuperation
35 Rekuperationsvorhalt
36 Zeitlicher Gradient
37 Zeitlicher Gradient
38 Regelabweichung
39 Strategische Rekuperationsgrenze
40 Verfügbare Rekuperation
I Instationäre Momentenaufbauphase
T0 Zeitpunkt

**Patentansprüche**

1. Verfahren zum Kompensieren einer Aktuatordynamik einer mechanischen Bremse (11) eines Kraftfahrzeugs (10), wobei eine Aufteileinrichtung (23) eine Vorgabe für eine Soll-Gesamtverzögerung (20) des Kraftfahrzeugs (10) empfängt und in Abhängigkeit von der Soll-Gesamtverzögerung (20) ein mechanisches Soll-Bremsmoment (24) ermittelt und an die mechanische Bremse (11) signalisiert, damit die mechanische Bremse (11) durch Betreiben eines Bremsaktuators (22) ein mechanisches Ist-Bremsmoment (28) auf das mechanische Soll-Bremsmoment (24) einregelt, wobei die Aktuatordynamik des Bremsaktuators (22) in einer instationären Momentenaufbauphase (I) des mechanischen Ist-Bremsmoments (28) einen begrenzten zeitlichen Gradienten (36) kleiner als ein zeitlicher Gradient (37) des signalisierten mechanischen Soll-Bremsmoments (24) aufweist, so dass sich beim Einregeln eine Regelabweichung (38) (Regeldifferenz) ergibt, wobei die Aufteileinrichtung (23) das mechanische Ist-Bremsmoment (28) mittels eines Modells (27) des Bremsaktuators (22) in Abhängigkeit von einem aktuellen Betriebszustand des Bremsaktuators (22) und in Abhängigkeit von dem Gradienten (37) des mechanischen Soll-Bremsmoments (24) prädiziert und in Abhängigkeit von dem prädizierten mechanischen Ist-Bremsmoment (28) durch Ansteuern zumindest einer vorbestimmten, von der mechanischen Bremse (11) verschiedenen Fahrzeugkomponente (13) ein Kompensationsmoment (31) erzeugt, durch welches sich in dem Kraftfahrzeug (10) insgesamt die Soll-Gesamtverzögerung (20) ergibt, **dadurch gekennzeichnet, dass** die Aufteileinrichtung (23) die Vorgabe der Soll-Gesamtverzögerung (20) jeweils zumindest einmal aus einem Geschwindigkeitsregelautomaten (19) und/oder einem Drive-by-Wire-System und/oder aus einer Schleppmoment-Simulation empfängt.

2. Verfahren nach Anspruch 1, wobei als Fahrzeugkomponente (13) ein Rekuperationssystem des Kraftfahrzeugs (10) und/oder ein Retarder angesteuert wird und das Kompensationsmoment (31) als Bremsmoment erzeugt und in der instationären Momentenaufbauphase (I) auf einen Wert der Regelabweichung (38) eingestellt wird.

3. Verfahren nach Anspruch 2, wobei bei einer Betätigung eines Bremspedals und/oder bei einem durch ein vorbestimmtes Fahrerassistenzsystem (14) signalisierten Bremseingriff (15) und/oder bei einem Rekuperationsabbruch ein Soll-Bremsmoment (25') für das Rekuperationssystem (13) und/oder den Retarder graduell reduziert und das mechanische Soll-Bremsmoment (24) für die mechanische Bremse (11) vergrößert wird, um auf die mechanische Bremse (11) überzublenden.

4. Verfahren nach Anspruch 2 oder 3, wobei die Soll-Gesamtverzögerung (20) ohne eine Anforderung des mechanisches Bremsmoments (28) erfolgt und die Aufteileinrichtung (23) dennoch nur einen Teil der Soll-Gesamtverzögerung (20) mittels des Rekuperationssystems (13) und/oder des Retarders bewirkt und den verbleibenden Teil mittels der mechanischen Bremse (11) bewirkt und hierdurch die mechanische Bremse (11) die instationäre Momentenaufbauphase (I) durchlaufen muss.

5. Verfahren nach einem der Ansprüche 2 bis 4, wobei ein Rekuperationsbetrieb des Rekuperationssystems (13) bereits reduziert wird, bevor eine Rekuperationsgrenze (40) des Rekuperationssystems (13) erreicht ist und hier-

**EP 3 600 984 B1**

durch ein Rekuperationsvorhalt (35) als ein vorbestimmter konstanter Wert oder adaptiv mittels des Modells (27) in Abhängigkeit von einem aktuellen Betriebszustand des Bremsaktuators (22) eingestellt wird.

6. Verfahren nach Anspruch 4 oder 5, wobei nur für eine Soll-Gesamtverzögerung (20) größer als ein vorbestimmter Mindestwert (34), die Soll-Gesamtverzögerung (20) durch das Aufteilen auf ein mechanisches Soll-Bremsmoment (24) einerseits und ein rekuperatives Soll-Bremsmoment (25') für das Rekuperationssystem (13) und/oder ein weiteres Soll-Bremsmoment für den Retarder andererseits aufgeteilt wird und für eine Soll-Gesamtverzögerung (20) kleiner als der Mindestwert (34) die mechanische Bremse (11) unbetrieben bleibt.

7. Verfahren nach Anspruch 6, wobei der Mindestwert (34) geschwindigkeitsabhängig eingestellt wird.

8. Verfahren nach einem der vorhergehenden Ansprüche, wobei die mechanische Bremse (11) zum Vorbereiten eines Bremsmanövers durch Vorgeben des mechanischen Soll-Bremsmoments (24) bei einer Soll-Gesamtverzögerung (20) von 0 vorgespannt wird und als Fahrzeugkomponente ein Antriebsmotor des Kraftfahrzeugs (10) angesteuert wird und das Kompensationsmoment als zusätzlich von dem Antriebsmotor erzeugtes Antriebsmoment erzeugt und auf den Wert des mechanischen Ist-Bremsmoments (28) eingestellt wird.

9. Verfahren nach einem der vorhergehenden Ansprüche, wobei als mechanische Bremse (11) eine hydraulische Bremse angesteuert wird, bei welcher sich die Aktuatordynamik mit dem begrenzten zeitlichen Gradienten durch ein Auffüllen eines Bremssystems der hydraulischen Bremse mit Bremsflüssigkeit in der Momentenaufbauphase (I) ergibt.

10. Verfahren nach einem der vorhergehenden Ansprüche, wobei das Modell (27) einen Funktionszusammenhang von gefördertem Bremsflüssigkeitsvolumen (V) und hierdurch bewirktem Bremsdruck (p) auf der Grundlage eines Polynoms zweiter Ordnung annähert.

11. Steuervorrichtung (12) für ein Kraftfahrzeug (10), **dadurch gekennzeichnet, dass** eine Prozessoreinrichtung (27) der Steuervorrichtung (12) dazu eingerichtet ist, ein Verfahren nach einem der vorhergehenden Ansprüche durchzuführen.

**Claims**

1. Method for compensating actuator dynamics of a mechanical brake (11) of a motor vehicle (10), wherein a dividing device (23) receives a specification for a total setpoint deceleration (20) of the motor vehicle (10) and determines a mechanical setpoint braking torque (24) in accordance with the total setpoint deceleration (20) and signals said mechanical setpoint braking torque (24) to the mechanical brake (11) so that the mechanical brake (11) adjusts a mechanical actual braking torque (28) to the mechanical setpoint braking torque (24) by operating a brake actuator (22), wherein the actuator dynamics of the brake actuator (22) has, in a transient torque build-up phase (I) of the mechanical actual braking torque (28), a limited time gradient (36) which is lower than a time gradient (37) of the signalled mechanical setpoint braking torque (24), so that a control error (38) (control difference) is produced during the adjustment, wherein the dividing device (23) predicts the mechanical actual braking torque (28) by means of a model (27) of the brake actuator (22) in accordance with a current operating state of the brake actuator (22) and in accordance with the gradient (37) of the mechanical setpoint braking torque (24), and generates a compensation torque (31) in accordance with the predicted mechanical actual braking torque (28) by actuating at least one predetermined vehicle component (13) which is different from the mechanical brake (11), which compensation torque (31) brings about overall the total setpoint deceleration (20) in the motor vehicle (10), **characterized in that** the dividing device (23) receives the specification of the total setpoint deceleration (20) in each case at least once from an automatic cruise control system (19) and/or a drive-by-wire system and/or from a drag torque simulation.

2. Method according to Claim 1, wherein a recuperation system of the motor vehicle (10) and/or a retarder are/is actuated as the vehicle component (13), and the compensation torque (31) is generated as a braking torque and is set to a value of the control error (38) in the transient torque build-up phase (I).

3. Method according to Claim 2, wherein when a brake pedal is activated and/or when there is a braking intervention (15) signalled by a predetermined driver assistance system (14) and/or when there is a recuperation abort a setpoint braking torque (25') for the recuperation system (13) and/or the retarder are/is gradually reduced, and the mechanical setpoint braking torque (24) for the mechanical brake (11) is increased, in order to blend over onto the mechanical brake (11).

4. Method according to Claim 2 or 3, wherein the total setpoint deceleration (20) occurs without a request for the mechanical braking torque (28), and the dividing device (23) nevertheless brings about only part of the total setpoint deceleration (20) by means of the recuperation system (13) and/or the retarder and brings about the remaining part by means of the mechanical brake (11), and as a result the mechanical brake (11) has to run through the transient torque build-up phase (I).

5. Method according to one of Claims 2 to 4, wherein a recuperation operation of the recuperation system (13) is already reduced before a recuperation limit (40) of the recuperation system (13) is reached, and as a result a recuperation reserve (35) is set as a predetermined constant value or is set adaptively by means of a model (27) in accordance with a current operating state of the brake actuator (22).

6. Method according to Claim 4 or 5, wherein the total setpoint deceleration (20) is divided by dividing into a mechanical setpoint braking torque (24), on the one hand, and a recuperative setpoint braking torque (25') for the recuperation system (13) and/or a further setpoint braking torque for the retarder, on the other hand, only for a total setpoint deceleration (20) which is higher than a predetermined minimum value (34), and the mechanical brake (11) remains unactuated for a total setpoint deceleration (20) which is lower than the minimum value (34).

7. Method according to Claim 6, wherein the minimum value (34) is set in a speed-dependent fashion.

8. Method according to one of the preceding claims, wherein the mechanical brake (11) is prestressed in order to prepare a braking manoeuvre, by specifying the mechanical setpoint braking torque (24) in the case of a total setpoint deceleration (20) of 0, and a drive motor of the motor vehicle (10) is actuated as a vehicle component, and the compensation torque is generated as the drive torque which is additionally generated by the drive motor, and said compensation torque is set to the value of the mechanical actual braking torque (28).

9. Method according to one of the preceding claims, wherein a hydraulic brake is actuated as a mechanical brake (11), in which hydraulic brake the actuator dynamics are produced with the limited time gradient by filling a brake system of the hydraulic brake with brake fluid in the torque build-up phase (I).

10. Method according to one of the preceding claims, wherein the model (27) approximates a functional relationship of the delivered brake fluid volume (V) and the brake pressure (p) which is brought about as a result, on the basis of a second order polynomial.

11. Control device (12) for a motor vehicle (10), **characterized in that** a processor device (27) of the control device (12) is configured to carry out a method according to one of the preceding claims.

**Revendications**

1. Procédé de compensation d'une dynamique d'actionneur d'un frein mécanique (11) d'un véhicule automobile (10), un dispositif de division (23) recevant une spécification de décélération totale cible (20) du véhicule automobile (10) et déterminant, en fonction de la décélération totale cible (20), un couple de freinage mécanique cible (24) et le signalant au frein mécanique (11) afin que le frein mécanique (11) ajuste un couple de freinage mécanique réel (28) sur le couple de freinage mécanique cible (24) par actionnement d'un actionneur de frein (22), la dynamique de l'actionneur de frein (22) présentant, dans une phase de formation de couple transitoire (I) du couple de freinage mécanique réel (28), un gradient temporel limité (36) qui est inférieur à un gradient temporel (37) du couple mécanique de freinage cible signalé (24) de façon à obtenir un écart de régulation (38) (différence de régulation) lors de la régulation, le dispositif de division (23) prédisant le couple de freinage mécanique réel (28) à l'aide d'un modèle (27) de l'actionneur de frein (22) en fonction d'un état de fonctionnement actuel de l'actionneur de frein (22) et en fonction du gradient (37) du couple de freinage mécanique cible (24) et générant, en fonction du couple de freinage mécanique réel prédit (28) en activant au moins un élément de véhicule prédéterminé (13) différent du frein mécanique (11), un couple de compensation (31) qui permet d'obtenir dans l'ensemble la décélération totale cible (20) dans le véhicule automobile (10), **caractérisé en ce que** le dispositif de division (23) reçoit une spécification de la décélération totale cible (20) au moins une fois d'un automate de régulation de vitesse (19) et/ou d'un système Drive-by-Wire et/ou d'une simulation de couple de traînée.

**2.** Procédé selon la revendication 1, un système de récupération du véhicule automobile (10) et/ou un ralentisseur étant commandé en tant que composant de véhicule (13) et le couple de compensation (31) étant généré comme couple de freinage et étant régulé à une valeur de l'écart de régulation (38) dans la phase de formation de couple transitoire (I).

**3.** Procédé selon la revendication 2, lorsqu'une pédale de frein est actionnée et/ou lorsqu'une intervention de freinage (15) est signalée par un système d'aide à la conduite prédéterminé (14) et/ou lorsque la récupération est interrompue, un couple de freinage cible (25') destiné au système de récupération (13) et/ou au ralentisseur étant progressivement réduit et le couple de freinage mécanique cible (24) du frein mécanique (11) étant augmenté pour se fondre sur le frein mécanique (11) .

**4.** Procédé selon la revendication 2 ou 3, la décélération totale cible (20) étant effectuée sans demande de couple de freinage mécanique (28) et le dispositif de division (23) n'effectuant néanmoins qu'une partie de la décélération totale cible (20) au moyen du système de récupération (13) et/ou du ralentisseur et effectuant la partie restante au moyen du frein mécanique (11) et ainsi le frein mécanique (11) devant effectuer la phase de formation de couple transitoire (I).

**5.** Procédé selon l'une des revendications 2 à 4, un fonctionnement en récupération du système de récupération (13) étant déjà réduit avant qu'une limite de récupération (40) du système de récupération (13) ne soit atteinte et en conséquence une constante de récupération (35) étant réglée comme valeur constante prédéterminée ou de manière adaptative au moyen du modèle (27) en fonction d'un état de fonctionnement actuel de l'actionneur de frein (22).

**6.** Procédé selon la revendication 4 ou 5, uniquement pour une décélération totale cible (20) supérieure à une valeur minimale prédéterminée (34), la décélération totale cible (20) étant divisée en un couple de freinage mécanique cible (24) d'une part et un couple de freinage de récupération cible (25') du système de récupération (13) et/ou un autre couple de freinage cible du ralentisseur d'autre part et le frein mécanique (11) restant inopérant pendant une décélération totale cible (20) inférieure à la valeur minimale (34).

**7.** Procédé selon la revendication 6, la valeur minimale (34) étant réglée en fonction de la vitesse.

**8.** Procédé selon l'une des revendications précédentes, le frein mécanique (11) étant précontraint pour préparer une manoeuvre de freinage par spécification du couple de freinage mécanique cible (24) pour une décélération totale cible (20) de 0 et un moteur d'entraînement du véhicule automobile (10) étant commandé en tant que composant de véhicule et le couple de compensation étant en outre généré par le couple d'entraînement généré par le moteur d'entraînement et réglé sur la valeur du couple de freinage mécanique réel (28).

**9.** Procédé selon l'une des revendications précédentes, un frein hydraulique étant commandé en tant que frein mécanique (11), dans lequel la dynamique d'actionneur s'obtient avec le gradient de temps limité par remplissage d'un système de freinage du frein hydraulique avec du liquide de frein dans la phase de formation de couple (I).

**10.** Procédé selon l'une des revendications précédentes, le modèle (27) se rapprochant d'une relation fonctionnelle entre le volume de liquide de frein délivré (V) et la pression de freinage ainsi générée (p) sur la base d'un polynôme du second ordre.

**11.** Dispositif de commande (12) destiné à véhicule automobile (10), **caractérisé en ce qu'**un dispositif de traitement (27) du dispositif de commande (12) est conçu pour mettre en œuvre un procédé selon l'une des revendications précédentes.

Fig.1

EP 3 600 984 B1

Fig.2

EP 3 600 984 B1

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012020880 A1
- DE 19810656 A1
- EP 2743151 A1
- DE 102015215532 A1